# FASCICULE DE BREVET EUROPEEN

(11) **EP 4 308 881 B1**
(45) Date de publication et mention de la délivrance du brevet: **26.03.2025**
(21) Numéro de dépôt: 22709354.9
(22) Date de dépôt: 02.02.2022
(51) Int. Cl.: G01C 21/30

(54) **PROCEDE ET DISPOSITIF DE DETERMINATION D'UNE FIABILITE D'UNE CARTOGRAPHIE BASSE DEFINITION.**
VERFAHREN UND VORRICHTUNG ZUR BESTIMMUNG DER ZUVERLÄSSIGKEIT EINER KARTE MIT NIEDRIGER AUFLÖSUNG
METHOD AND DEVICE FOR DETERMINING THE RELIABILITY OF A LOW-DEFINITION MAP

(30) Priorité: 15.03.2021 FR 2102517
(43) Date de publication de la demande: 24.01.2024
(73) Titulaire: Stellantis Auto SAS, 78300 Poissy (FR)
(72) Inventeur: DESCHENES, Olivier, 92240 Malakoff (FR); REY, Alexis, 92210 St Cloud (FR); GAUTHIER, Pierre Clément, 51100 Reims (FR); VIVET, Luc, 75016 Paris 16 (FR); NID BOUHOU, Soumia, Casablanca, 20000 (MA)
(74) Mandataire: ESIP
(86) Numéro de dépôt international: PCT/FR2022/050190
(87) Numéro de publication internationale: WO 2022/195182

(56) Documents cités:
- EP-A2- 2 282 170
- CN-A- 111 767 354
- FR-A1- 3 082 349
- FR-A1- 3 090 547
- US-A1- 2007 299 606

## Description

La présente invention revendique la priorité de la demande française 2102517 déposée le 15.03.2021.

L'invention est dans le domaine des systèmes d'aide à la conduite de véhicule autonome. En particulier, l'invention concerne la détermination d'une fiabilité d'une cartographie basse définition pour fiabiliser l'activation d'au moins un système d'aide à la conduite d'un véhicule autonome.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Parmi les systèmes d'aide à la conduite, sont connus, par exemple, les dispositifs de maintien dans la voie, les dispositifs de changement de voie, les dispositifs de régulation de vitesse adaptative, ...

Un véhicule, comprenant un de ces dispositifs, comprend de nombreux capteurs comme une caméra, un RADAR, un LIDAR, des ultrasons, des accéléromètres, une centrale inertielle, des capteurs de position ou de localisation, des capteurs de vitesse, des capteurs d'accélération, ... Il est connu des traitements d'informations réalisées par au moins un calculateur embarqué dans le véhicule qui rendent apte à percevoir l'environnement. Par environnement, on entend l'extérieur et l'intérieur du véhicule.

Cette perception de l'environnement rend apte à identifier puis reconnaître des signalisations routières, dites également signalisations, des caractéristiques d'une route et/ou d'une voie, ...

Egalement, cette perception de l'environnement rend apte une mesure d'une pente d'une route sur laquelle circule le véhicule et une détermination d'une trajectoire de la route sur laquelle circule véhicule. La détermination de la trajectoire de la route est par exemple la détermination des coefficients d'au moins un polynôme qui modélise la trajectoire de la route. Par exemple, la trajectoire est découpée en plusieurs segments ou plusieurs portions. Chaque segment ou portion est modélisé par un polynôme.

Par ailleurs ce véhicule comprend également un système de navigation qui comprend un moyen pour se localiser et une cartographie. Il existe différents types de cartographie. Une cartographie haute définition, dite cartographie HD, caractérise les voies et des attributs liés à la route comme un nombre de voie, des courbures de la route, une pente de la route, des signalisations routières, ... Par ailleurs, avec une cartographie HD, le système de navigation, qui est connecté avec des serveurs extérieurs au véhicule par des liaisons de télécommunication, met régulièrement à jour la cartographie. Ainsi, les attributs liés à la route sont ainsi très à jour. Par ailleurs, dans une cartographie HD, les attributs sont bien positionnés (résolution de 1 mètre).

Dans une cartographie SD, simple définition, la caractérisation des voies est moins précise et les attributs ne sont pas toujours bien numérisé (manque ou positionnement moins précise de l'ordre de plusieurs mètres). La cartographie est également moins régulièrement mise à jour. Si cette mise à jour est réalisée manuellement et annuellement à partir d'une base de données d'un fournisseur de cartographie, les données sont alors en moyennes datées de 6 mois.

Par une mise à jour régulière et une précision des attributs, une cartographie HD est intrinsèquement fiable. Ainsi, il est connu que des systèmes ADAS d'un véhicule comprenant une cartographie HD, utilisent les informations issues de la cartographie pour améliorer des fonctionnalités de ces systèmes ADAS. Par exemple, ces fonctionnalités sont aptes à agir sur la dynamique longitudinale et transversale du véhicule par une activation d'un système d'aide à la conduite (par exemple modifier une vitesse consigne, modifier un positionnement du véhicule dans la voie, ...). Malheureusement, le coût d'embarquer une cartographie HD est très élevé par rapport au prix de revient de fabrication d'un véhicule. Si le véhicule embarque une cartographe SD, il est dangereux de conditionner des activations ou des modifications de consignes de systèmes d'aide à la conduite qui agissent directement sur la direction et/ou sur la vitesse du véhicule. Une cartographie SD n'est pas assez fiable.

On connait par le document FR3082349 un système d'assistance à la conduite monte sur véhicule. On connait par le document FR3090547 un dispositif de vérification d'une carte haute définition d'un véhicule automobile. On connait par le document CN111767354 une méthode d'évaluation de précision cartographique de haute précision. On connait par le document US2007/299606 un système d'aide à la conduite. On connait par le document EP2282170 un dispositif de spécification de la fiabilité des informations utilisées pour une aide à la conduite.

Afin d'utiliser des informations de la cartographie par un système d'aide à la conduite, il est connu des dispositifs calculant un indicateur instantané de fiabilité de la cartographie. En particulier, est utilisé la précision de localisation donnée par un dispositif de type GPS (de l'anglais « Global Positioning System »). Cependant, ces dispositifs calculant un indicateur instantané de fiabilité de la cartographie, d'une part, supposent que les informations pour calculer l'indicateur sont continuellement disponibles et, d'autre part, restent assez conceptuel dans la mise en œuvre. Malheureusement, la perception de l'environnement nécessite un fort volume d'information à traiter, et donc une forte charge de calculs. Ainsi dans certains cas d'usage (nombreux véhicules autour du véhicule autonome, fortes accélérations ou décélérations, ...) ou conditions météorologiques, certaines informations de perception sont régulièrement manquantes ou arrivent tardivement. Par ailleurs, les informations de perception issues d'un traitement d'image sont aussi régulièrement manquantes à cause de la visibilité disponible (par exemple, un camion peut cacher une signalisation routière en bord de voie). Ainsi, les calculs d'un indicateur instantané de fiabilité de la cartographie périodiquement lorsque le véhicule circule sur une route varient brusquement et aléatoirement. L'indicateur est alors instable, non fiable et inutilisable, pour des raisons de sécurité, dans des systèmes d'aides à la conduite.

Un objet de la présente invention est de remédier au problème précité, en particulier fiabiliser les informations, caractéristiques de la voie et attributs, issues d'une cartographie SD.

A cet effet, un premier aspect de l'invention concerne un procédé de détermination d'une fiabilité d'une cartographie basse définition pour fiabiliser l'activation d'au moins un système d'aide à la conduite d'un véhicule autonome, ledit véhicule autonome circulant sur une route et comprenant un système de navigation et un système de perception, le système de navigation comprenant ladite cartographie et fournissant des données cartographiées, le système de perception fournissant des données mesurées du véhicule et/ou de l'environnement extérieure du véhicule, ledit procédé étant mis à jour périodiquement lorsque ledit véhicule circule sur une route et comportant les étapes de :
- Réception de données cartographiées par le système de navigation, les données cartographiées comportant au moins une pente cartographiée de la route autour du véhicule, au moins une courbure cartographiée de la route autour du véhicule, et une liste de signalisations routières cartographiées, dite liste cartographiée, la liste cartographiée comportant, pour chaque signalisation routière, un type, une localisation et une information contextuelle ;
- Réception de données mesurées par le système de perception, les données de perception comportant une pente mesurée de la route autour du véhicule, une trajectoire mesurée de la route autour du véhicule, et une liste de signalisations routières mesurées, dite liste mesurée, la liste mesurée comportant, pour chaque signalisation routière, un type, une localisation et une information contextuelle ;
- Détermination d'une trajectoire de la route, dite trajectoire cartographiée, à partir de la courbure cartographiée ;
- Calcul d'une valeur de corrélation route à partir de la au une moins pente cartographiée, de la trajectoire cartographiée, de la pente mesurée, de la trajectoire mesurée, plus il y a concordance entre les données cartographiées et les données mesurées plus la valeur de corrélation croît ;
- Calcul d'une valeur de corrélation signalisation à partir de la liste signalisation routière cartographiée et de la liste signalisation routière mesurées, plus il y a concordance entre les données cartographiées et les données mesurées plus la valeur de corrélation croît ;
- Détermination d'un indicateur de fiabilité, fiable ou non fiable, l'indicateur étant fiable si une combinaison de la valeur de corrélation route et de la valeur de corrélation signalisation est supérieure à un seuil prédéterminé.

Ainsi, s'il y a une bonne fiabilité cela signifie que le système de navigation positionne bien le véhicule sur la cartographie, et, aussi, que la cartographie est localement fiable (autour du véhicule, de la distance de perception). Un système d'aide à la conduite qui pilote la dynamique longitudinale et/ou latérale du véhicule peut se fier aux données issues de la cartographie.

Combiner la valeur de corrélation route avec la valeur de corrélation signalisation apporte comme effet de rendre encore plus sûr la détermination de l'indicateur de fiabilité de la cartographie. La détermination de l'indicateur de fiabilité de la cartographie est robuste aux incertitudes de mesures par l'utilisation de la valeur de corrélation route et de la valeur de corrélation signalisation d'indice de corrélation qui prend en compte des caractéristiques géométriques de la route et des signalisations routières présentes aux abords de la route.

En effet, les capteurs de perception de l'environnement comme une caméra embarquée en haut de parebrise du véhicule sont sensibles aux objets présents dans l'environnement. Par exemple, si le véhicule autonome suit un camion, la visibilité devant le véhicule devient faible et il est alors difficile d'avoir une trajectoire mesurée et donc d'avoir une bonne concordance pour le calcul de la valeur de corrélation route. Par contre, la visibilité à gauche ou à droite du camion reste possible, un panneau de signalisation est détectable. Alors, la détermination de la valeur de corrélation signalisation est apte à donner une bonne concordance entre les données cartographiées et les données mesurées.

Avantageusement, la valeur de corrélation route est un nombre entre 0 et 1, initialisée à 0, et dans lequel la valeur de corrélation signalisation est un nombre entre 0 et 1, initialisée à 0.

Avantageusement, le procédé comporte en outre les étapes de
- Détermination d'un indicateur de pente indiquant une concordance entre la pente cartographiée et la pente mesurée, l'indicateur de pente étant un nombre compris entre 0 et 1, la valeur 1 indiquant une forte concordance et la valeur 0 indiquant une absence de concordance, l'indicateur de pente croît ou décroit selon un gradient calculé, le gradient étant fonction de l'écart entre la pente cartographiée et la pente mesurée ;
- Détermination d'un indicateur de trajectoire indiquant une concordance entre la trajectoire cartographiée et la trajectoire mesurée, l'indicateur de trajectoire étant un nombre compris entre 0 et 1, la valeur 1 indiquant une forte concordance et la valeur 0 indiquant une absence de concordance, l'indicateur de trajectoire croît ou décroit selon un gradient calculé, le gradient étant fonction de l'écart latéral entre la trajectoire cartographiée et la trajectoire mesurée ;
   et dans lequel
- La valeur de corrélation route est une pondération entre l'indicateur de pente et l'indicateur de trajectoire.

L'utilisation des deux indicateurs rend une mise à jour de la valeur de corrélation route prédictive et réactive. Elle est prédictive grâce à l'indicateur de trajectoire qui se base sur une vision lointaine du système de perception (entre 30 et 300 mètres par exemple). Elle est réactive grâce à l'indicateur de pente qui se base sur un vison très rapproché du véhicule, la mesure de la pente n'est connue que là où circule, ou a circulé, le véhicule.

Par l'utilisation d'un gradient, l'historique de détermination est pris en compte évitant ainsi des variations brusques de la détermination de la fiabilité de la cartographie. Avantageusement, le procédé comporte en outre une étape de
- Détermination, à partir de la liste cartographiée et de la liste mesurée, d'un indicateur de nombre indiquant un nombre de signalisations routières concordantes en type et en localisation entre les deux listes ;
- Détermination, à partir de la liste cartographiée et de la liste mesurée, d'un indicateur contextuel, indiquant une concordance sur le contexte entre les deux listes ;
   Et dans lequel
- La valeur de corrélation signalisation est calculée à partir de l'indicateur de nombre, de l'indicateur contextuel et de la valeur de corrélation précédemment calculée, la valeur de corrélation croît ou décroît d'un gradient fonction de l'indicateur de nombre et de l'indicateur contextuel ;

L'utilisation de l'indicateur de nombre et de l'indicateur contextuel rend une mise à jour de la valeur de corrélation prédictive et réactive. Elle est prédictive grâce à l'indicateur de nombre qui se base sur une vision lointaine d'une caméra par exemple (jusqu'à 300 mètres par exemple). Elle est réactive grâce à l'indicateur contextuel qui se base sur un vison très rapproché du véhicule, la reconnaissance de la vitesse n'est connue que dans l'environnement immédiat du véhicule (entre 0 et 10 mètres par exemple).

Par l'utilisation d'un gradient, l'historique de détermination est pris en compte évitant ainsi des variations brusques de la détermination de la fiabilité de la cartographie.

Avantageusement, l'indicateur de fiabilité est déterminé, à partir de la valeur de corrélation route et de la valeur de corrélation signalisation, sur au moins 4 niveaux :
- Un niveau indiquant une bonne fiabilité de la vitesse limite actuelle, une bonne fiabilité de la vitesse limite passée, et une bonne fiabilité de la géométrie de la route ;
- Un niveau indiquant une bonne fiabilité de la vitesse limite passée, et une bonne fiabilité de la géométrie de la route, une insuffisance de fiabilité de la vitesse limite actuelle ;
- Un niveau indiquant une bonne fiabilité de la géométrie de la route, une insuffisance de fiabilité de la vitesse limite actuelle et une insuffisance de fiabilité de la vitesse limite passée ;
- Un niveau indiquant une insuffisance de fiabilité de la vitesse limite actuelle, une insuffisance de fiabilité de la vitesse limite passée, et une insuffisance de fiabilité de la géométrie de la route.

Ainsi, la détermination de la fiabilité de la cartographie est robuste aux incertitudes de mesures par la combinaison d'indice de corrélation entre caractéristiques géométriques de la route et signalisation routières présentes aux abords de la route. L'indicateur de fiabilité est plus spécifique et comporte plus de nuances et identifie des cas de vies différents. Cette différenciation est utile selon les fonctions ADAS. Par exemple, une fonction ADAS sur la régulation de vitesse a besoin de savoir s'il y a une bonne fiabilité de la vitesse limite actuelle ou passée. Une fonction ADAS basée sur le freinage d'urgence n'a pas besoin de savoir la fiabilité de la vitesse limite.

Un deuxième aspect de l'invention concerne un dispositif comprenant au moins un processeur et une mémoire associée à ledit au moins un processeur, ledit au moins un processeur étant configuré pour mettre en œuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur. D'autres caractéristiques et avantages de l'invention ressortiront de la description des modes de réalisation non limitatifs de l'invention ci-après, en référence aux figures annexées, sur lesquelles :
[Fig. 1] illustre schématiquement un dispositif, selon un exemple particulier de réalisation de la présente invention.
[Fig. 2] illustre schématiquement un procédé de détermination d'une fiabilité d'une cartographie basse définition, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

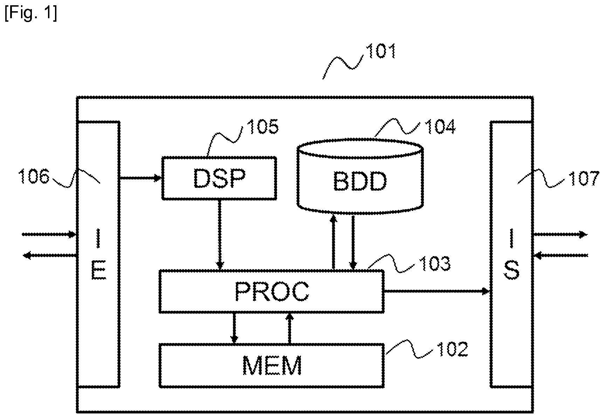

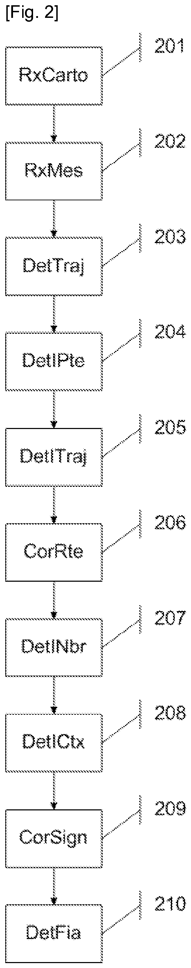

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en œuvre par un processeur 103 d'au moins une étape du procédé tel que décrit ci-avant. Le dispositif comporte aussi une mémoire de masse 104 pour le stockage de données destinées à être conservées après la mise en œuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en œuvre par le procédé selon l'invention et une interface de sortie 107 pour la transmission des données mises en œuvre par le procédé selon l'invention. Dans un mode de réalisation, l'interface d'entrée 106 et l'interface de sortie 107 sont purement logiciel (de type API de l'acronyme anglais « Application Programming Interface », une solution informatique qui permet de communiquer et d'échanger des services et/ou des données).

La figure 2 illustre schématiquement un procédé de détermination d'une fiabilité d'une cartographie basse définition, selon un exemple particulier de réalisation de la présente invention.

Le procédé est mis en œuvre par un dispositif 101 dans un véhicule autonome qui comprend au moins un système d'aide à la conduite. Ledit véhicule autonome circule sur une route et comprend un système de navigation et un système de perception. Ledit système de navigation comprend ladite cartographie et fournit au moins une pente et au moins une courbure de la route autour dudit véhicule, dites pente cartographiée et courbure cartographiée. Ledit système de perception fournit une pente et une trajectoire de la route autour dudit véhicule, dites pente mesurée et trajectoire mesurée.

Chaque liste, liste cartographiée et liste mesurée, comprend, pour chaque signalisation routière dans la liste, un type, une localisation et une information contextuelle.

Par type de signalisation, on entend, sans être limitatif, une signalisation par panneaux, une signalisation par feux, une signalisation par marquage des chaussées, une signalisation par balisage, une signalisation par bornage, et/ou une signalisation par dispositifs de fermeture. Dans un mode de réalisation, un type de signalisation est plus précis et comprend, comme par exemple pour les panneaux, des panneaux indiquant un danger, des panneaux comportant une prescription absolue, des panneaux comportant une simple indication ou indiquant une direction, des panneaux relatifs aux intersections et aux régimes de priorité, et/ou des panonceaux. Egalement, un type est apte à comprendre une forme, comme par exemple pour un panneau, un triangle, un triangle inversé, un cercle, un carré, un rectangle, une forme hexagonale, ou tout autre forme géométrique. Par exemple, un type est un panneau de limitation de vitesse. A l'aide d'une caméra embarqué dans le véhicule et un traitement d'image associé, il est connu de reconnaître un type de signalisation à une distance de 300 mètre par exemple ou même plus.

Par information contextuelle, on entend une signification, une valorisation, une interprétation et/ou donner un sens plus précis d'une signalisation reconnue par une caméra et son traitement d'image associé. Par exemple, sans être limitatif, une information contextuelle est un nombre de feux, une valeur de vitesse limite d'un panneau de limitation de vitesse, une direction à droite obligatoire à la prochaine intersection, une identification de l'image (voiture, camion, piéton cycliste, ...) ... A l'aide d'une caméra embarqué dans le véhicule et un traitement d'image associé, il est connu de reconnaître l'information contextuelle d'une signalisation à une distance de 10 mètre par exemple, et souvent, l'information de reconnaissance n'est disponible seulement lorsque le véhicule est au niveau de la signalisation, donc sans anticipation.

Par localisation, on entend une distance relative, en longitudinal, en latérale et/ou en hauteur, de l'emplacement de la signalisation routière par rapport à la position actuelle du véhicule. Dans un mode opératoire préféré, une liste comprend les localisations autour du véhicule dans un horizon couvrant, par exemple, de 3000 mètres devant le véhicule à -500 mètres (donc derrière le véhicule). Une liste mesurée et une liste cartographiée comprennent le même horizon. Ainsi la liste mesurée comporte une mémoire des détections passées proche. Par exemple, si, à un instant T, un panneau de signalisation avec une valeur de vitesse limite a été identifiée et localisée à 0 mètres du véhicule, à l'instant T+3 secondes, pour un véhicule roulant à 120 km/h, le panneau de signalisation avec la valeur de vitesse limite est localisé à -100 mètres (donc 100 mètres derrière le véhicule).

Lorsque le véhicule circule, ledit procédé est mis jour à périodiquement, par exemple toutes les 100 ms, mais une autre valeur est possible. Dans un mode de réalisation, la mise à jour est également faite sur un évènement détecté ou sur une demande d'un des systèmes d'aide à la conduite.

L'étape 201, RxCarto, est une étape de réception de données cartographiées par le système de navigation, les données cartographiées comportant au moins une pente cartographiée de la route autour du véhicule, au moins une courbure cartographiée de la route autour du véhicule, et une liste de signalisations routières cartographiées, dite liste cartographiée, la liste cartographiée comportant, pour chaque signalisation routière, un type, une localisation et une information contextuelle.

L'étape 202, RxMes, est une étape de réception de données mesurées par le système de perception, les données de perception comportant une pente mesurée de la route autour du véhicule, une trajectoire mesurée de la route autour du véhicule, et une liste de signalisations routières mesurées, dite liste mesurée, la liste mesurée comportant, pour chaque signalisation routière, un type, une localisation et une information contextuelle.

L'étape 203, DetTraj, est une étape de détermination d'une trajectoire de la route, dite trajectoire cartographiée, à partir de la courbure cartographiée.

Dans un mode opératoire préféré, le système de navigation fourni des informations autour du véhicule dans un horizon couvrant, par exemple, de 3000 mètres devant le véhicule à -500 mètres (donc derrière le véhicule). Sur cet horizon, la cartographie est découpée en segments. Chaque segment représente une portion de la route sur laquelle circule le véhicule. Une portion comprend donc une distance. La au moins courbure cartographiée correspond à une courbure par segment ainsi que la longueur du segment. Mis bout à bout, l'ensemble des segments représente la route sur laquelle circule véhicule un l'horizon donné.

Ainsi, à partir des courbures de chaque segment, une trajectoire de la route, dite trajectoire cartographiée, est déterminée. Cette détermination est réalisée, par exemple, par la détermination d'un polynôme calculée à partir des données de la au moins courbure cartographiée. Dans un autre exemple, cette détermination est obtenue à partir d'interpolation de la au moins une courbure cartographiée.

L'étape 204, DetIPte, est une étape de détermination d'un indicateur de pente indiquant une concordance entre la pente cartographiée et la pente mesurée, l'indicateur de pente étant un nombre compris entre 0 et 1, la valeur 1 indiquant une forte concordance et la valeur 0 indiquant une absence de de concordance, l'indicateur de pente croît ou décroit selon un gradient calculé, le gradient étant fonction de l'écart entre la pente cartographiée et la pente mesurée.

Dans un mode opératoire, si l'écart absolu et/ou relatif entre la pente cartographiée, pente fourni par le système de navigation à l'endroit où circule le véhicule, et la pente mesurée est inférieur à un seuil prédéterminé, alors l'indicateur de pente vaut 1, sinon l'indicateur de pente vaut 0.

Dans un mode opératoire préféré, l'indicateur de pente croît ou décroit selon un gradient calculé, le gradient étant fonction de l'écart entre la pente cartographiée et la pente mesurée. Le gradient est un nombre compris entre -1 et 1. En fonction de l'écart, une valeur de gradient est choisie. Par exemple si l'écart est inférieur à un seuil, le gradient est égal à 0,002, sinon, le gradient est égal à -0,002. Ainsi, à chaque période, l'indicateur de pente est mis à jour en prenant donc en compte l'historique ce qui assure une robustesse aux erreurs aléatoires de mesures et/ou aux erreurs et/ou imprécisions de la cartographie.

Dans un autre mode opératoire, le gradient est également fonction de la variation de la pente mesurée. En cas de forte accélération ou décélération, la pente mesurée est temporairement plus fortement entachée d'erreurs. Par exemple, le gradient est égal à 0,004 si la variation de la pente est inférieure à un autre seuil prédéterminé et si l'écart entre la pente cartographiée et la pente mesurée est inférieure à un seuil prédéterminé.

L'étape 205, DetITraj, est une étape de détermination d'un indicateur de trajectoire indiquant une concordance entre la trajectoire cartographiée et la trajectoire mesurée, l'indicateur de trajectoire étant un nombre compris entre 0 et 1, la valeur 1 indiquant une forte concordance et la valeur 0 indiquant une absence de de concordance, l'indicateur de trajectoire croît ou décroit selon un gradient calculé, le gradient étant fonction de l'écart latérale entre la trajectoire cartographiée et la trajectoire mesurée.

Le gradient est un nombre compris entre -1 et 1. En fonction de l'écart, une valeur de gradient est choisie. Par exemple si l'écart est inférieur à un seuil, le gradient est égal à 0,002, sinon, le gradient est égal à -0,002. Ainsi, à chaque période, l'indicateur de trajectoire est mis à jour en prenant donc en compte l'historique ce qui assure une robustesse aux erreurs aléatoires de mesures et/ou aux erreurs et/ou imprécisions de la cartographie.

Dans un autre mode opératoire, le gradient est fonction d'une combinaison de l'écart entre la trajectoire cartographiée et la trajectoire mesurée pour chaque segment. Plus le nombre d'écart inférieur à un seuil est grand plus le gradient est élevé.

L'étape 206, CorRte, est une étape de calcul d'une valeur de corrélation route à partir de la au une moins pente cartographiée, de la trajectoire cartographiée, de la pente mesurée, de la trajectoire mesurée, plus il y a concordance entre les données cartographiées et les données mesurées plus la valeur de corrélation croît.

Dans un mode opératoire, la valeur de corrélation route est une pondération entre l'indicateur de pente et l'indicateur de trajectoire. Par exemple, la valeur de corrélation est égale à 40% de l'indicateur de pente additionné à 60% de l'indicateur de trajectoire. Les pourcentages donnés sont à titre d'exemple, d'autre valeur sont possible. Idéalement, le pourcentage de l'indicateur de pente est inférieur à l'indicateur de trajectoire, l'indicateur de trajectoire étant plus robuste. Le pourcentage peut être également fonction d'autres paramètres, comme sur au moins un seuil de la variation de la pente mesurée.

L'étape 207, DetINbr, est une étape de détermination, à partir de la liste cartographiée et de la liste mesurée, d'un indicateur de nombre indiquant un nombre de signalisations routières concordantes en type et en localisation entre les deux listes. La concordance est une simple comparaison entre les deux de listes. Par exemple, pour chaque type de signalisation de la liste cartographiée on vérifie si un même type de signalisation avec la même localisation est présente dans la liste mesurée. Dans l'affirmatif, il y a une concordance et l'indicateur de nombre croît d'une valeur de 1, l'indicateur de nombre étant initialisé à 0 en début de procédure.

Puisque les données d'une cartographie sont peu précises (erreur courante de localisation de l'ordre de 2 mètres) et puisque les mesures sont toujours entachées d'erreurs (localisation de l'ordre de 1 à 30 mètres suivant la distance relative de la signalisation reconnue par rapport au véhicule), la localisation d'une signalisation cartographiée et d'une signalisation mesurée est la même si la différence de localisation est inférieure à un seuil prédéfini. Par exemple, ce seuil est de 5 mètres et /ou est variable en fonction de la distance relative par rapport au véhicule (par exemple, plus une localisation est loin du véhicule plus le seuil est grand).

Dans cette étape, l'indicateur en nombre est d'autant plus élevé que le nombre de concordance trouvé. Une concordance en type est égale robuste par rapport à des erreurs sur une cartographie SD. Par exemple, si localement une vitesse limite a été changée, passage de 90 km/h à 80 km/h sur des routes nationales, alors que la cartographie n'est pas jour, la concordance en type et localisation est valide pour cette signalisation même si la valeur de la vitesse limite n'est pas égale entre la signalisation mesurée et la signalisation cartographiée.

L'étape 208, DetICtx, est une étape de détermination, à partir de la liste cartographiée et de la liste mesurée, d'un indicateur contextuel, indiquant une concordance sur le contexte entre les deux listes.

La détermination de l'indicateur contextuel est réalisable par plusieurs méthodes. Par exemple, une des méthodes est de créer un indicateur booléen, concordance ou absence de concordance de contexte. Il y a concordance de cotexte si une signalisation de la liste cartographiée concorde en type, localisation et contexte avec une signalisation de la liste mesurée. Une concordance en type ou contexte pour une signalisation signifie la même valeur dans les deux listes. Une concordance en localisation signifie une proximité, un écart de localisation inférieure un seuil prédéterminé ou variable selon la distance relative par rapport au véhicule comme décrit ci-auparavant.

Dans un mode opératoire préféré, l'indicateur de contexte à trois valeurs. L'indicateur de contexte prend une première valeur, dite concordance de contexte actuelle, s'il y a une concordance en type, localisation et en contexte dans un voisinage proche du véhicule. Le voisinage proche étant, par exemple, une distance de 50 mètres autour du véhicule, notamment devant et derrière le véhicule. La concordance de localisation est déterminée à un seuil près. La première valeur correspond à une situation où la signalisation routière est proche du véhicule et donc facilement reconnue par le dispositif de perception ou qui a été reconnu quelques instants précédemment. Dans un voisinage poche du véhicule, la détection du contexte est très fiable.

En absence d'une détermination d'une concordance de contexte présente, l'indicateur de contexte prend une deuxième valeur, dite concordance de contexte passé, s'il y a une concordance en type, localisation et en contexte en dehors du voisinage proche du véhicule. Au-delà du voisinage proche, si la signalisation est devant le véhicule, si un contexte est reconnu (cas rare), cette reconnaissance est moins fiable. Si la signalisation est derrière le véhicule, elle a été reconnue précédemment depuis un certain temps et/ou distance. Cette reconnaissance est également moins fiable. La deuxième valeur correspond à une concordance de contexte moins fiable. En l'absence de détermination d'une concordance de contexte passé, l'indicateur de concordance prend une troisième valeur correspondant à une absence de concordance de contexte.

L'étape 209, CorSign, est une étape de calcul d'une valeur de corrélation signalisation à partir de la liste signalisation routière cartographiée et de la liste signalisation routière mesurées, plus il y a concordance entre les données cartographiées et les données mesurées plus la valeur de corrélation croît. Par exemple, la valeur de corrélation signalisation est calculée à partir de l'indicateur de nombre, de l'indicateur contextuel et de la valeur de corrélation précédemment calculée, la valeur de corrélation croît ou décroît d'un gradient fonction de l'indicateur de nombre et de l'indicateur contextuel. Le gradient est une valeur comprise entre -1 et 1, et la valeur de corrélation est initialisée à 0 puis est bornée entre 0 et 1.

Différentes méthodes permettent de calculer la valeur de corrélation. Dans un premier exemple, on affecte une valeur numérique à l'indicateur contextuel puis en fonction du produit entre l'indicateur contextuel et l'indicateur de nombre, on affecte une valeur de gradient. Par exemple, plus le produit est élevé plus le gradient est élevé.

Dans un mode opératoire préféré, le gradient est déterminé par un tableau prédéterminé fonction de l'indicateur de nombre et l'indicateur contextuel comme, par exemple dans le tableau ci-dessous.

| Valeur du gradient | | Indicateur contextuel | | |
|---|---|---|---|---|
| | | Absence de concordance | Concordance passée | Concordance actuelle |
| Indicateur de nombre | 0 | -0.001 | 0 | 0.001 |
| | 1 | -0.001 | 0.001 | 0.002 |
| | 2 | 0.001 | 0.002 | 0.003 |
| | >3 | 0.002 | 0.004 | 0.006 |

Ainsi le gradient est d'autant plus levé qu'il y a de concordance en type, en localisation et en contexte en les deux listes. Inversement, le gradient est d'autant plus petit et/ou négatif en absence ou faible concordance. Avantageusement, plus l'indicateur de nombre est grand plus le gradient est élevé. Avantageusement, si l'indicateur contextuel indique une concordance alors le gradient est positif. Avantageusement, si l'indicateur contextuel indique une non concordance alors le gradient est négatif, sauf si l'indicateur de nombre est supérieur à un seuil prédéfini où dans ce cas le gradient est positif.

D'autres règles sont également possibles pour déterminer à chaque période une valeur de gradient en fonction des concordances. Par exemple, si le dispositif de perception n'arrive à pas à reconnaître le type de signalisation, le gradient est choisi négatif.

L'étape 210, DetFia, est une étape de détermination d'un indicateur de fiabilité. Dans un mode opératoire cet indicateur indique fiable ou non fiable, l'indicateur étant fiable si une combinaison de la valeur de corrélation route et de la valeur de corrélation signalisation est supérieure à un seuil prédéterminé. Par exemple, si une pondération de la valeur de corrélation route et de la valeur de corrélation signalisation est supérieur à 0,5 l'indicateur indique une fiabilité de la cartographie. Dans un mode opératoire la pondération est 33% de la valeur de corrélation route et 67% de la valeur de corrélation signalisation. D'autres valeurs sont possibles et leurs déterminations dépendent, par exemple, de données cartographiées et de données mesurées.

Dans un mode opératoire préféré, l'indicateur de fiabilité est déterminé, à partir à partir de la valeur de corrélation route et de la valeur de corrélation signalisation, sur au moins 4 niveaux :
- Un niveau indiquant une bonne fiabilité de la vitesse limite actuelle, une bonne fiabilité de la vitesse limite passée, et une bonne fiabilité de la géométrie de la route. Par exemple, dans ce cas la valeur de corrélation signalisation est supérieur à un premier seuil, 0,66 par exemple, et la valeur de corrélation route est supérieur à un deuxième seuil, 0,6 par exemple.
- Un niveau indiquant une bonne fiabilité de la vitesse limite passée, et une bonne fiabilité de la géométrie de la route, une insuffisance de fiabilité de la vitesse limite actuelle. Par exemple, dans ce cas la valeur de corrélation signalisation est supérieur à un troisième seuil inférieur au premier seuil, 0,33 par exemple, et la valeur de corrélation route est supérieur au deuxième seuil.
- Un niveau indiquant une bonne fiabilité de la géométrie de la route, une insuffisance de fiabilité de la vitesse limite actuelle et une insuffisance de fiabilité de la vitesse limite passée. Par exemple, dans ce cas la valeur de corrélation signalisation est inférieure au troisième seuil, et la valeur de corrélation route est supérieur au deuxième seuil.
- Un niveau indiquant une insuffisance de fiabilité de la vitesse limite actuelle, une insuffisance de fiabilité de la vitesse limite passée, et une insuffisance de fiabilité de la géométrie de la route. Par exemple, dans ce cas la valeur de corrélation signalisation est inférieure au troisième seuil, et la valeur de corrélation route est inférieure au deuxième seuil.

La présente invention ne se limite pas aux formes de réalisation décrites ci-avant à titre d'exemples ; elle s'étend à d'autres variantes.

Par exemple, des valeurs numériques ont été données en particulier pour les gradients. D'autres valeurs sont possibles et dépendent, par exemple de la période d'actualisation de la procédure.

## Revendications

1. Procédé de détermination d'une fiabilité d'une cartographie basse définition pour fiabiliser l'activation d'au moins un système d'aide à la conduite d'un véhicule autonome, ledit véhicule autonome circulant sur une route et comprenant un système de navigation et un système de perception, le système de navigation comprenant ladite cartographie et fournissant des données cartographiées, le système de perception fournissant des données mesurées du véhicule et/ou de l'environnement extérieure du véhicule, ledit procédé étant mis à jour périodiquement lorsque ledit véhicule circule sur une route et comportant les étapes de :
• Réception (201) de données cartographiées par le système de navigation, les données cartographiées comportant au moins une pente cartographiée de la route autour du véhicule, au moins une courbure cartographiée de la route autour du véhicule, et une liste de signalisations routières cartographiées, dite liste cartographiée, la liste cartographiée comportant, pour chaque signalisation routière, un type, une localisation et une information contextuelle ;
• Réception (202) de données mesurées par le système de perception, les données de perception comportant une pente mesurée de la route autour du véhicule, une trajectoire mesurée de la route autour du véhicule, et une liste de signalisations routières mesurées, dite liste mesurée, la liste mesurée comportant, pour chaque signalisation routière, un type, une localisation et une information contextuelle ;
• Détermination (203) d'une trajectoire de la route, dite trajectoire cartographiée, à partir de la courbure cartographiée ;
• Calcul (206) d'une valeur de corrélation route à partir de la au une moins pente cartographiée, de la trajectoire cartographiée, de la pente mesurée, de la trajectoire mesurée, plus il y a concordance entre les données cartographiées et les données mesurées plus la valeur de corrélation croît ;
• Calcul (209) d'une valeur de corrélation signalisation à partir de la liste signalisation routière cartographiée et de la liste signalisation routière mesurées, plus il y a concordance entre les données cartographiées et les données mesurées plus la valeur de corrélation croît ;
• Détermination (210) d'un indicateur de fiabilité, fiable ou non fiable, l'indicateur étant fiable si une combinaison de la valeur de corrélation route et de la valeur de corrélation signalisation est supérieure à un seuil prédéterminé.

2. Procédé selon la revendication 1 dans lequel la valeur de corrélation route est un nombre entre 0 et 1, initialisée à 0, et dans lequel la valeur de corrélation signalisation est un nombre entre 0 et 1, initialisée à 0.

3. Procédé selon l'une des revendications précédentes dans lequel le procédé comporte en outre les étapes de
• Détermination (204) d'un indicateur de pente indiquant une concordance entre la pente cartographiée et la pente mesurée, l'indicateur de pente étant un nombre compris entre 0 et 1, la valeur 1 indiquant une forte concordance et la valeur 0 indiquant une absence de concordance, l'indicateur de pente croît ou décroit selon un gradient calculé, le gradient étant fonction de l'écart entre la pente cartographiée et la pente mesurée ;
• Détermination (205) d'un indicateur de trajectoire indiquant une concordance entre la trajectoire cartographiée et la trajectoire mesurée, l'indicateur de trajectoire étant un nombre compris entre 0 et 1, la valeur 1 indiquant une forte concordance et la valeur 0 indiquant une absence de concordance, l'indicateur de trajectoire croît ou décroit selon un gradient calculé, le gradient étant fonction de l'écart latérale entre la trajectoire cartographiée et la trajectoire mesurée ;
et dans lequel
• La valeur de corrélation route est une pondération entre l'indicateur de pente et l'indicateur de trajectoire.

4. Procédé selon l'une des revendications précédentes dans lequel le procédé comporte en outre une étape de
• Détermination (207), à partir de la liste cartographiée et de la liste mesurée, d'un indicateur de nombre indiquant un nombre de signalisations routières concordantes en type et en localisation entre les deux listes ;
• Détermination (208), à partir de la liste cartographiée et de la liste mesurée, d'un indicateur contextuel, indiquant une concordance sur le contexte entre les deux listes ;
Et dans lequel
• La valeur de corrélation signalisation est calculée à partir de l'indicateur de nombre, de l'indicateur contextuel et de la valeur de corrélation précédemment calculée, la valeur de corrélation croît ou décroît d'un gradient fonction de l'indicateur de nombre et de l'indicateur contextuel ;

5. Procédé selon l'une des revendications précédentes, dans lequel l'indicateur de fiabilité est déterminé (210), à partir de la valeur de corrélation route et de la valeur de corrélation signalisation, sur au moins 4 niveaux :
• Un niveau indiquant une bonne fiabilité de la vitesse limite actuelle, une bonne fiabilité de la vitesse limite passée, et une bonne fiabilité de la géométrie de la route ;
• Un niveau indiquant une bonne fiabilité de la vitesse limite passée, et une bonne fiabilité de la géométrie de la route, une insuffisance de fiabilité de la vitesse limite actuelle ;
• Un niveau indiquant une bonne fiabilité de la géométrie de la route, une insuffisance de fiabilité de la vitesse limite actuelle et une insuffisance de fiabilité de la vitesse limite passée ;
• Un niveau indiquant une insuffisance de fiabilité de la vitesse limite actuelle, une insuffisance de fiabilité de la vitesse limite passée, et une insuffisance de fiabilité de la géométrie de la route.

6. Dispositif (101) comprenant une interface d'entrée adaptée pour recevoir des données d'un système de navigation et d'un système de perception d'un véhicule autonome, au moins un processeur et une mémoire (102) associée à ledit au moins un processeur (103), ledit au moins un processeur (103) étant configuré pour mettre en œuvre le procédé selon l'une des revendications précédentes.

7. Véhicule comportant le dispositif selon la revendication précédente.

8. Programme d'ordinateur comprenant des instructions adaptées pour l'exécution des étapes du procédé selon l'une des revendications 1 à 5 lorsque ledit programme est exécuté par le dispositif selon la revendication 6.

## Patentansprüche

1. Verfahren zum Bestimmen einer Zuverlässigkeit einer Karte mit niedriger Definition, um die Aktivierung mindestens eines Fahrhilfesystems eines autonomen Fahrzeugs zuverlässig zu machen, wobei das autonome Fahrzeug auf einer Straße fährt und ein Navigationssystem und ein Wahrnehmungssystem umfasst, wobei das Navigationssystem die Karte umfasst und kartierte Daten liefert, wobei das Wahrnehmungssystem gemessene Daten des Fahrzeugs und/oder der äußeren Umgebung des Fahrzeugs liefert, wobei das Verfahren periodisch aktualisiert wird, wenn das Fahrzeug auf einer Straße fährt, und die Schritte umfasst:
• Empfang (201) von durch das Navigationssystem kartierten Daten, wobei die kartierten Daten mindestens eine kartierte Neigung der Straße um das Fahrzeug herum, mindestens eine kartierte Krümmung der Straße um das Fahrzeug herum und eine Liste kartierter Straßenschilder, die kartierte Liste genannt wird, umfassen, wobei die kartierte Liste für jedes Straßenschild einen Typ, einen Standort und Kontextinformationen umfasst;
• Empfang (202) von durch das Wahrnehmungssystem gemessenen Daten, wobei die Wahrnehmungsdaten eine gemessene Neigung der Straße um das Fahrzeug herum, eine gemessene Trajektorie der Straße um das Fahrzeug herum und eine Liste von gemessenen Straßenschildern, die als gemessene Liste bezeichnet wird, umfassen, wobei die gemessene Liste für jedes Straßenschild einen Typ, einen Ort und Kontextinformationen umfasst;
• Bestimmung (203) eines Streckenpfades, der als kartierter Pfad bezeichnet wird, aus der kartierten Krümmung;
• Berechnung (206) eines Straßenkorrelationswerts aus der am wenigsten abgebildeten Neigung, der abgebildeten Flugbahn, der gemessenen Neigung, der gemessenen Flugbahn, je mehr die abgebildeten Daten mit den gemessenen Daten übereinstimmen, desto mehr steigt der Korrelationswert an;
• Berechnung (209) eines Signalkorrelationswerts aus der Liste der kartierten Straßenverkehrszeichen und der Liste der gemessenen Straßenverkehrszeichen, je mehr die kartierten Daten mit den gemessenen Daten übereinstimmen, desto mehr steigt der Korrelationswert an;
• Bestimmung (210) eines zuverlässigen oder unzuverlässigen Zuverlässigkeitsindikators, wobei der Indikator zuverlässig ist, wenn eine Kombination des Streckenkorrelationswerts und des Signalisierungskorrelationswerts über einem vorbestimmten Schwellenwert liegt.

2. Verfahren nach Anspruch 1, wobei der Routenkorrelationswert eine Zahl zwischen 0 und 1 ist, initialisiert auf 0, und wobei der Signalisierungskorrelationswert eine Zahl zwischen 0 und 1 ist, initialisiert auf 0.

3. Verfahren nach Anspruch 1, wobei das Verfahren ferner die folgenden Schritte umfasst
• Bestimmung (204) eines Neigungsindikators, der eine Übereinstimmung zwischen der kartierten Neigung und der gemessenen Neigung anzeigt, wobei der Neigungsindikator eine Zahl zwischen 0 und 1 ist, der Wert 1 eine starke Übereinstimmung anzeigt und der Wert 0 eine fehlende Übereinstimmung anzeigt, wobei der Neigungsindikator entsprechend einem berechneten Gradienten zunimmt oder abnimmt, wobei der Gradient eine Funktion der Differenz zwischen der kartierten Neigung und der gemessenen Neigung ist;
• Bestimmung (205) eines Leitkurvenindikators, der eine Übereinstimmung zwischen der kartierten Leitkurve und der gemessenen Leitkurve angibt, wobei der Leitkurvenindikator eine Zahl zwischen 0 und 1 ist, der Wert 1 eine starke Übereinstimmung angibt und der Wert 0 eine fehlende Übereinstimmung angibt, der Leitkurvenindikator entsprechend einem berechneten Gradienten zunimmt oder abnimmt, wobei der Gradient eine Funktion der seitlichen Abweichung zwischen der kartierten Leitkurve und der gemessenen Leitkurve ist;
und in denen
• Der Streckenkorrelationswert ist eine Gewichtung zwischen dem Neigungsindikator und dem Wegindikator.

4. Verfahren nach Anspruch 1, wobei das Verfahren ferner einen Schritt umfasst:
• Bestimmung (207) eines Zahlenindikators aus der kartierten Liste und der gemessenen Liste, der eine Anzahl von Verkehrszeichen angibt, die in Art und Lage zwischen den beiden Listen übereinstimmen;
• Bestimmung (208) eines Kontextindikators aus der kartierten Liste und der gemessenen Liste, der eine Übereinstimmung des Kontexts zwischen den beiden Listen anzeigt;
und in denen
• Der Signalkorrelationswert wird aus dem Zahlenindikator, dem Kontextindikator und dem zuvor berechneten Korrelationswert berechnet, wobei der Korrelationswert in Abhängigkeit des Zahlenindikators und des Kontextindikators um einen Gradienten zunimmt oder abnimmt.

5. Verfahren nach einem der vorhergehenden Ansprüche, bei dem der Zuverlässigkeitsindikator auf der Grundlage des Streckenkorrelationswertes und des Signalisierungskorrelationswertes über mindestens 4 Pegel ermittelt wird (210):
• Ein Wert, der eine gute Zuverlässigkeit der aktuellen Grenzgeschwindigkeit, eine gute Zuverlässigkeit der früheren Grenzgeschwindigkeit und eine gute Zuverlässigkeit der Straßengeometrie anzeigt;
• Ein Wert, der auf eine gute Zuverlässigkeit der früheren Grenzgeschwindigkeit und eine gute Zuverlässigkeit der Straßengeometrie, eine unzureichende Zuverlässigkeit der derzeitigen Grenzgeschwindigkeit hinweist;
• Ein Wert, der auf eine gute Zuverlässigkeit der Straßengeometrie, eine unzureichende Zuverlässigkeit der derzeitigen Grenzgeschwindigkeit und eine unzureichende Zuverlässigkeit der früheren Grenzgeschwindigkeit hinweist;
• Ein Wert, der auf eine Unzuverlässigkeit der aktuellen Grenzgeschwindigkeit, eine Unzuverlässigkeit der früheren Grenzgeschwindigkeit und eine Unzuverlässigkeit der Straßengeometrie hinweist.

6. Vorrichtung (101) mit einer Eingabeschnittstelle, die zum Empfangen von Daten von einem Navigationssystem und von einem Wahrnehmungssystem eines autonomen Fahrzeugs ausgelegt ist, mindestens einem Prozessor und einem Speicher (102), der dem mindestens einen Prozessor (103) zugeordnet ist, wobei der mindestens eine Prozessor (103) konfiguriert ist, um das Verfahren nach einem der vorhergehenden Ansprüche zu implementieren.

7. Fahrzeug mit der Vorrichtung nach dem vorhergehenden Anspruch.

8. Computerprogramm, das Befehle umfasst, die geeignet sind, die Schritte des Verfahrens nach einem der Ansprüche 1 bis 5 auszuführen, wenn das Programm durch die Vorrichtung nach Anspruch 6 ausgeführt wird.

## Claims

1. Method for determining a reliability of a low-definition map in order to make the activation of at least one driving aid system of an autonomous vehicle reliable, said autonomous vehicle traveling on a road and comprising a navigation system and a perception system, the navigation system comprising said map and supplying mapped data, the perception system supplying measured data of the vehicle and/or of the external environment of the vehicle, said method being updated periodically when said vehicle is traveling on a road and comprising the steps of:
• Reception (201) of data mapped by the navigation system, the mapped data comprising at least one mapped slope of the road around the vehicle, at least one mapped curvature of the road around the vehicle, and a list of mapped road signs, called mapped list, the mapped list comprising, for each road sign, a type, a location and contextual information;
• Reception (202) of data measured by the perception system, the perception data comprising a measured slope of the road around the vehicle, a measured trajectory of the road around the vehicle, and a list of measured road signs, called the measured list, the measured list comprising, for each road sign, a type, a location and contextual information;
• Determination (203) of a route path, referred to as the mapped path, from the mapped curvature;
• Calculation (206) of a road correlation value from the least slope mapped, the mapped trajectory, the measured slope, the measured trajectory, the more the mapped data matches the measured data, the more the correlation value increases;
• Calculation (209) of a signal correlation value from the mapped road signs list and the measured road signs list, the more the mapped data matches the measured data, the more the correlation value increases;
• Determination (210) of a reliable or unreliable reliability indicator, the indicator being reliable if a combination of the route correlation value and the signaling correlation value is above a predetermined threshold.

2. The method according to claim 1, wherein the route correlation value is a number between 0 and 1, initialized to 0, and wherein the signaling correlation value is a number between 0 and 1, initialized to 0.

3. The method according to claim 1, wherein the method further comprises the steps of
• Determination (204) of a slope indicator indicating a match between the mapped slope and the measured slope, the slope indicator being a number between 0 and 1, the value 1 indicating a strong match and the value 0 indicating an absence of match, the slope indicator increases or decreases according to a calculated gradient, the gradient being a function of the difference between the mapped slope and the measured slope;
• Determination (205) of a trajectory indicator indicating a match between the mapped trajectory and the measured trajectory, the trajectory indicator being a number between 0 and 1, the value 1 indicating a strong match and the value 0 indicating an absence of match, the trajectory indicator increases or decreases according to a calculated gradient, the gradient being a function of the lateral deviation between the mapped trajectory and the measured trajectory;
and in which
• The route correlation value is a weighting between the slope indicator and the path indicator.

4. The method according to claim 1, wherein the method further comprises a step of
• Determination (207), from the mapped list and the measured list, of a number indicator indicating a number of road signs that match in type and location between the two lists;
• Determination (208), from the mapped list and the measured list, of a contextual indicator, indicating a concordance on the context between the two lists;
and in which
• The signaling correlation value is calculated from the number indicator, the context indicator and the previously calculated correlation value, the correlation value increasing or decreasing by a gradient as a function of the number indicator and the context indicator.

5. Method according to one of the preceding claims, in which the reliability indicator is determined (210), on the basis of the route correlation value and the signaling correlation value, over at least 4 levels:
• A level indicating good reliability of the current limit speed, good reliability of the past limit speed, and good reliability of the road geometry;
• A level indicating good reliability of the past limit speed, and good reliability of the road geometry, insufficient reliability of the current limit speed;
• A level indicating good reliability of the road geometry, insufficient reliability of the current limit speed and insufficient reliability of the past limit speed;
• A level indicating unreliability of the current limit speed, unreliability of the past limit speed, and unreliability of the road geometry.

6. Device (101) comprising an input interface adapted to receive data from a navigation system and from a perception system of an autonomous vehicle, at least one processor and a memory (102) associated with said at least one processor (103), said at least one processor (103) being configured to implement the method according to one of the preceding claims.

7. Vehicle comprising the device according to the preceding claim.

8. A computer program comprising instructions suitable for executing the steps of the method according to one of claims 1 to 5 when said program is executed by the device according to claim 6.
